# EUROPÄISCHE PATENTSCHRIFT

(11) **EP 0 898 124 B1**
(45) Veröffentlichungstag und Bekanntmachung des Hinweises auf die Patenterteilung: **14.05.2003**
(21) Anmeldenummer: 98114386.0
(22) Anmeldetag: 31.07.1998
(51) Int. Cl.: F24D 11/00, F24D 3/08

(54) **Heizungsanlage**
Heating installation
Installation de chauffage

(30) Priorität: 16.08.1997 DE 19735557
(43) Veröffentlichungstag der Anmeldung: 24.02.1999
(73) Patentinhaber: ROBERT BOSCH GMBH, 70442 Stuttgart (DE)
(72) Erfinder: Marko, Armin, 70197 Stuttgart (DE)

(56) Entgegenhaltungen:
- DE-A- 3 503 738
- DE-A- 4 421 137
- DE-U- 29 506 172

## Beschreibung

Die Erfindung geht aus von einer Heizungsanlage nach der Gattung des unabhängigen Anspruchs.

### Stand der Technik

Aus dem "Handbuch für Heizungstechnik", herausgegeben von Buderus, 33. Auflage, 1994, Seite 6-51, ist bereits eine Anlage für die Brauchwassererwärmung bekannt. Ein Brauchwasserspeicher wird entweder über den Wärmetauscher einer Solaranlage oder über den einer Heizungsanlage erwärmt. Der Brauchwasserspeicher dient jedoch nicht als Wärmequelle für den Heizungskreis, so dass Heizungskreis und Heizkessel bedarfsmäßig gekoppelt sind.

Aus DE 35 03 738 A1 ist eine Heizungsanlage mit einem Wärmeerzeuger und einem Wärmespeicher bekannt, wobei der Wärmespeicher mit einem Wärmeträgermedium gefüllt ist und der Wärmeerzeuger das Wärmeträgermedium erwärmt. Die Heizungsanlage weist ferner einen im Wärmespeicher angeordneten Wärmetauscher auf, der dem Wärmeträgermedium im Wärmespeicher Wärme entzieht.

Ein Wassererhitzer mit einem Wärmespeicher für einen Heizkreis, der zugleich als Brauchwasserspeicher dient, ist aus der DE 44 21 137 A1 bekannt. Der Wärmespeicher ist in zwei Abschnitte unterteilt, wobei in jedem Abschnitt jeweils ein Wärmetauscher angeordnet ist. Der im oberen Abschnitt liegende Wärmetauscher dient der Brauchwassererwärmung. Der im unteren Abschnitt des Wärmespeichers liegende zweite Wärmetauscher dient als weitere Wärmequelle, wobei die Energie zum Speisen dieser Wärmequelle von einer Solaranlage geliefert wird.

Ein Schichtenspeicher mit einem integrierten Brauchwasserspeicher ist aus DE 295 06 172 U1 bekannt. Hierbei ist ein mit einem Wärmeträgermedium beaufschlagbarer Außenbehälter vorgesehen, in dem ein kegelförmiger Innenbehälter als Brauchwasserspeicher angeordnet ist.

### Vorteile der Erfindung

Die erfindungsgemäße Heizungsanlage umfasst einen Wärmespeicher, der mit einem Wärmeträger gefüllt ist. Ein Wärmeerzeuger erwärmt den Wärmeträger. Es sind Mittel vorgesehen, die zur Erwärmung eines Heizungskreises dem Wärmeträger Wärme entziehen. Der Wärmespeicher gewährleistet eine Entkopplung der Wärmeerzeugungsphase von der Wärmebedarfsphase. Dadurch lässt sich der Wärmeerzeuger unabhängig von der Wärmeanforderung in einem günstigen Betriebspunkt betreiben. Insbesondere während Heizperioden mit geringem Heizbedarf lässt sich die Takthäufigkeit des Wärmeerzeugers reduzieren, da der Wärmespeicher bei hoher Feuerungsleistung des Wärmeerzeugers die bereitgestellte Heizwärme zwischenspeichert und nach Bedarf abgibt. Dadurch, dass über ein erstes und zweites Anschlusspaar dem Wärmespeicher das Heizmedium entnommen und das vom Wärmeerzeuger erwärmte Heizmedium wieder zugeführt wird, lässt sich der Wärmeträger gezielt in unterschiedliche Speicherbereiche temperaturabhängig einschichten. Die so erreichte Aufteilung des Wärmespeichers in zwei Zonen erlaubt eine Nutzung des Wärmespeichers sowohl für den Heizungsbetrieb als auch für einen weiteren Anwendungsfall, der nicht von der Wärmeanforderung des Heizungskreises abhängt. Der Wirkungsgrad des Wärmeerzeugers nimmt durch diese Betriebsweise zu.

In einer zweckmäßigen Weiterbildung ist als Mittel ein innenliegender Wärmetauscher vorgesehen. Dieser entzieht dem Wärmespeicher die von dem Heizungskreis benötigte Wärme. Der Wärmetauscher kann in dem Wärmespeicher integriert werden, wobei dessen kompakte Bauweise aus fertigungstechnischer Hinsicht Vorteile aufweist.

In einer weiteren Ausgestaltung ist als Mittel ein im Heizungskreis liegender Heizungskreisspeicher vorgesehen, der den Wärmespeicher umschließt. Dieser weitere Wärmespeicher gewährleistet bei einem Heizungsbedarf des Heizungskreises eine Bereitstellung des erwärmten Wärmeträgers in ausreichender Menge innerhalb kurzer Zeit. Der anfängliche Wärmebedarf lässt sich beinahe verzögerungsfrei decken.

Der zweite Bereich des Wärmespeichers versorgt beispielsweise einen Brauchwasserkreis mit Wärme. Dies ist insbesondere dann vorteilhaft, wenn das erste Anschlußpaar oberhalb und das zweite Anschlußpaar unterhalb des Wärmetauschers angeordnet sind, wie dies in einem weiteren Ausführungsbeispiel vorgesehen ist.

Zweckmäßiger Weise erwärmt eine Solaranlage das Heizmedium. Der Wärmespeicher dient der Entkopplung der regenerativen Energieerzeugung von dem gewünschten Nutzerverhalten. Dank der zusätzlichen Wärmeeinspeisung entlastet die Solaranlage den Wärmeerzeuger. Der Brennstoffaufwand reduziert sich.

In einer zweckmäßigen Weiterbildung sind als Wärmeträger Brauchwasser und als Wärmespeicher ein Brauchwasserspeicher verwendet. Der Brauchwasserspeicher dient somit der Wärmebereitstellung sowohl für den Heizungskreis als auch für den Brauchwasserkreis.

Weitere zweckmäßige Weiterbildungen ergeben sich aus weiteren abhängigen Ansprüchen und aus der Beschreibung.

### Zeichnung

Ein mögliches Ausführungsbeispiel ist in der Zeichnung dargestellt und in der nachfolgenden Beschreibung näher erläutert. Es zeigen die Figuren 1 und 2 den Stand der Technik und Figur 3 den schematischen Aufbau eines Ausführungsbeispiels der erfindungsgemäßen Heizungsanlage.

### Beschreibung

Ein Wärmeerzeuger 26 erwärmt einen Wärmeträger des Wärmespeichers 10. Über ein Leitungspaar zirkuliert der Wärmeträger zwischen Wärmeerzeuger 26 und Wärmespeicher 10. Ein Wärmetauscher 20, der im Wärmespeicher 10 angeordnet ist, entzieht diesem Wärme und versorgt damit einen Heizungskreis 18.

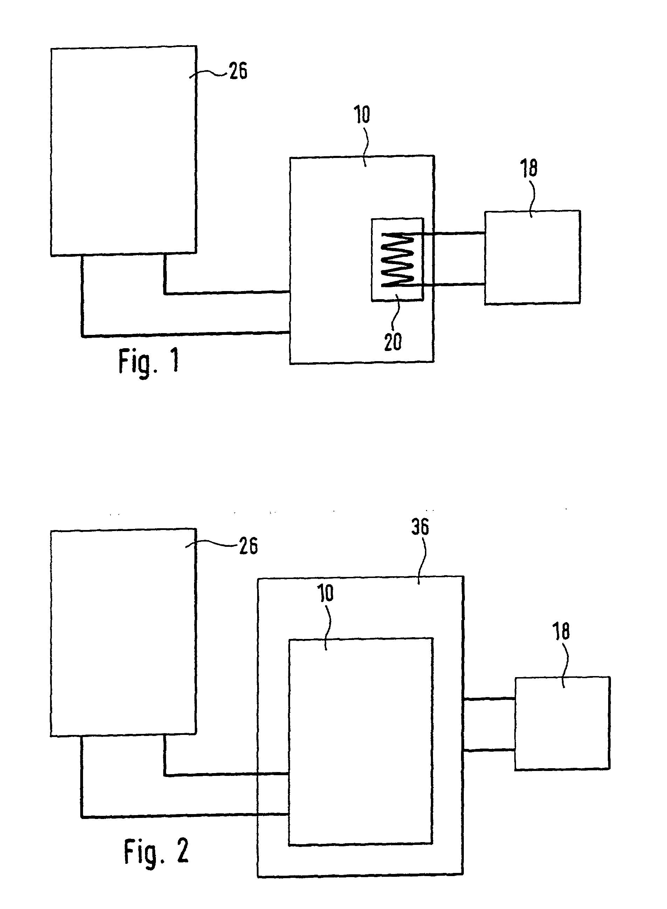

Bei der Anlage gemäß Figur 2 wird der Wärmespeicher 10 von einem Heizungskreisspeicher 36 umschlossen. Den Wärmeträger des Wärmespeichers 10 erwärmt der Wärmeerzeuger 26. Der Wärmespeicher 10 gibt an den Wärmeträger des Heizungskreisspeichers 36 Wärme ab, der den Heizungskreis 18 durchströmt.

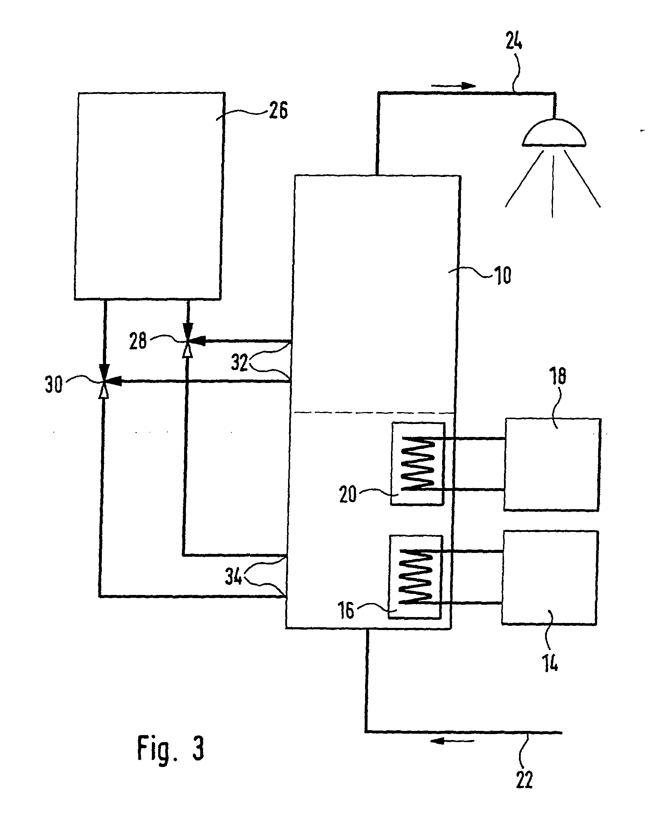

Gemäß der Figur 3 ist der Wärmespeicher 10 als Brauchwasserspeicher ausgeführt. Ihm wird einerseits über eine Kaltwasserleitung 22 kaltes Wasser zugeführt und andererseits im oberen Speicherbereich über eine Warmwasserleitung 24 warmes Brauchwasser entnommen. In dem Wärmespeicher 10 ist der Wärmetauscher 20 angeordnet, der dem Wärmespeicher 10 Wärme für den Heizungskreis 18 entzieht. Unterhalb des Wärmetauschers 20 befindet sich ein Solarwärmetauscher 16, der die von einer Solaranlage 14 bereitgestellte Wärme in den Wärmespeicher 10 einspeist. Ein erstes Anschlußpaar 32 entnimmt oberhalb des Wärmetauschers 20 den Wärmeträger und führt ihn nach Erwärmung durch den Wärmeerzeuger 26 dem Wärmespeicher 10 zu. Ein zweiter Wärmeträgerkreis wird durch ein zweites Anschlußpaar 34 realisiert, welches im unteren Speicherbereich angeordnet ist. Über ein erstes und zweites Umschaltventil 28, 30 läßt sich eine Auswahl treffen, über welches der beiden Anschlußpaare 32, 34 der Wärmeträger zirkuliert.

Als Wärmeerzeuger 26 kommen an sich bekannte fossil betriebene Durchlauferhitzer zum Einsatz. Der umlaufende Wärmeträger des Wärmespeichers 10 kann ebenso über Fernwärme oder eine Solaranlage beheizt werden. Über ein Leitungspaar wird dem Wärmespeicher 10 im Falle der Wärmeerzeugung der Wärmeträger entnommen, dem Wärmeerzeuger 26 und anschließend in erwärmter Form dem Wärmespeicher 10 wieder zugeführt. Mögliche Wärmeträger sind hinreichend bekannt. Um den Wärmespeicher 10 noch zusätzlich für die Brauchwasserbereitung zu nutzen, findet Brauchwasser als Wärmeträger Verwendung. Als Heizungskreis 18 im Sinne der Anmeldung wird ein System aus Heizkörpern und Rohrleitungen verstanden, die die Heizkörper mit Wärme versorgen. In diesem Heizungskreis 18 ist jedoch kein zusätzlicher Heizkessel installiert, so daß der Heizungskreis 18 seine Wärme lediglich über die Mittel 20, 36 bezieht, die dem Wärmeträger des Wärmespeichers 10 Wärme entziehen. Statt Heizungswasser könnte auch Luft als Wärmeträger des Heizungskreises 18 dienen. Gemäß Figur 1 ist als Wärmeübertragungsmittel zwischen Wärmespeicher 10 und Heizungskreis 18 ein innenliegender Wärmetauscher 20 vorgesehen. Bei einer Wärmeanforderung des Heizungskreises 18 durchströmt dessen Wärmeträger den Wärmetauscher 20, um dem Wärmespeicher 10 Wärme zu entziehen.

Gemäß der Anlage von Figur 2 umschließt der Heizungskreisspeicher 36 den Wärmespeicher 10, der bei entsprechenden Temperaturverhältnissen Wärme an den Heizungskreis 18 abgibt. Bei einer Nutzung des Wärmespeichers 10 als Brauchwasserspeicher kann dessen Volumen so gering gewählt werden, daß zum einen sich die Legionellenbildung erschwert. Zum anderen läßt sich die Temperaturschwankung bei einer Brauchwasserzapfung gerade noch ausreichend glätten.

Wird der Wärmespeicher 10 beispielsweise zur Brauchwassererwärmung verwendet, so heizt der Wärmeerzeuger 26 bei einer Brauchwasseranforderung im Durchflußprinzip das Brauchwasser auf. Bei hinreichend kleiner Zapfmenge erhöht sich jedoch das Temperaturniveau des Wärmespeichers 10. Bei einer Wärmeanforderung des Heizungskreises 18 entziehen der Wärmetauscher 20 oder das Speicher-In-Speicher-System dem Wärmespeicher 10 durch Umwälzung des Wärmeträgers des Heizungskreises 18 Wärme. Reicht diese aus, um die gewünschte Heizleistung zur Verfügung zu stellen, ist eine Aktivierung des Wärmeerzeugers 26 nicht mehr von Nöten. Andernfalls führt der Wärmeerzeuger 26 dem Wärmespeicher 10 zur Deckung des Wärmebedarfs des Heizungskreises 18 Energie zu.

Bei dem Ausführungsbeispiel gemäß Figur 3 ist der Wärmespeicher mit Brauchwasser gefüllt. Die Solaranlage 14 führt je nach Witterung über den Solarwärmetauscher 16 dem Wärmespeicher 10 Energie zu. Bei einer frostschutzsicheren Auslegung des Solarkreises kann der Solarwärmetauscher 16 zugunsten einer direkten Einspeisung entfallen. Das oberhalb des Wärmetauschers 20 angeordnete erste Anschlußpaar 32 erlaubt den Betrieb des Wärmespeichers 10 als Brauchwasserspeicher. Dank der natürlichen Schichtung ist das Temperaturniveau im oberen Teil des Speichers, dem Brauchwasserspeicher, höher als in dem Solar- oder Heizungsspeicherteil. Bei einer Brauchwasseranforderung wird die benötigte Wärmeleistung zunächst dem Wärmespeicher 10 entnommen. Falls die Temperatur des Warmwasserbereitschaftsvolumens während oder nach der Zapfung einen Wert unterhalb der Solltemperatur aufweist, wird die zusätzlich benötigte Wärme über den Wärmeerzeuger 26 geliefert. Dann entnimmt die untere Leitung des ersten Anschlußpaares 32 Brauchwasser und führt es dem Wärmeerzeuger 26 zu. Das erwärmte Brauchwasser wird über die zweite Leitung des ersten Anschlußpaares 32 im oberen Speicherteil eingespeist. Die Leistung des Wärmeerzeugers 26 ist speziell für die Brauchwassererwärmung ausgelegt. Relativ verzögerungsfrei wird dem Benutzer warmes Brauchwasser zur Verfügung gestellt. Auch die Solaranlage 14 trägt hierzu ihren Teil bei. In diesem Betriebsfall sind erstes und zweites Umschaltventil 28, 30 geschlossen.

Sollte das Temperaturniveau des Wärmespeichers 10 nicht ausreichen, um den gewünschten Wärmebedarf des Heizungskreises 18 zu decken, muß der Wärmeerzeuger 26 dem unteren Teil des Wärmespeichers 10 über das zweite Anschlußpaar 34 Wärme zuführen. Die eine Leitung des zweiten Anschlußpaares 34 entnimmt das Brauchwasser, speist über das zweite Umschaltventil 30 den Wärmeerzeuger 26, der das erwärmte Brauchwasser über die andere Leitung des zweiten Anschlußpaares 34 dem als Heizungs- bzw. Solarspeicher fungierenden Wärmespeicher 10 zuführt. Der Wärmetauscher 20 entzieht die dem unteren Speicherbereich gelieferte Wärme und erwärmt den Heizungskreis 18, indem der Wärmeträger des Heizungskreises 18 umgewälzt wird. Die restliche zugeführte Wärme steht dem oberen Teil des Wärmespeichers 10, dem Brauchwasserspeicher, bei einer bevorstehenden Zapfung zur Verfügung. Für die beschriebene Funktionsweise ist die Solaranlage 14 nicht notwendig. Sie dient lediglich als zusätzliche Wärmequelle.

## Patentansprüche

1. Heizungsanlage mit einem Wärmespeicher (10), der mit einem Wärmeträger gefüllt ist, mit einem Wärmeerzeuger (26), der den Wärmeträger erwärmt, wobei Mittel (20, 36) vorgesehen sind, die zur Erwärmung eines Heizungskreises (18) dem Wärmeträger Wärme entziehen, **dadurch gekennzeichnet, dass** über einen ersten Wärmeträgerkreis mit einem ersten Anschlusspaar (32) und über einen zweiten Wärmeträgerkreis mit einem zweiten Anschlusspaar (34) dem Wärmespeicher (10) der Wärmeträger entnehmbar und der vom Wärmeerzeuger (26) erwärmte Wärmeträger zuführbar ist, und dass das erste Anschlusspaar (32) in den oberen Bereich des Wärmespeichers (10) und das zweite Anschlusspaar (34) in den unteren Bereich des Wärmespeichers (10) mündet.

2. Heizungsanlage nach Anspruch 1, **dadurch gekennzeichnet, dass** als Mittel ein im Wärmespeicher (10) angeordneter Wärmetauscher (20) vorgesehen ist.

3. Heizungsanlage nach Anspruch 1, **dadurch gekennzeichnet, dass** das erste Anschlusspaar (32) oberhalb und das zweite Anschlusspaar (34) unterhalb des Wärmetauschers (20) angeordnet sind.

4. Heizungsanlage nach Anspruch 1, **dadurch gekennzeichnet, dass** als Mittel ein im Heizungskreis (18) liegender Heizungskreisspeicher (36) vorgesehen ist, der den Wärmespeicher (10) umschließt.

5. Heizungsanlage nach Anspruch 1, **dadurch gekennzeichnet, dass** der Wärmeträger über eine Solaranlage (14) erwärmt ist.

6. Heizungsanlage nach Anspruch 1, **dadurch gekennzeichnet, dass** als Wärmeerzeuger (26) ein Durchlauferhitzer verwendet ist.

7. Heizungsanlage nach Anspruch 1, **dadurch gekennzeichnet, dass** bei einer Wärmeanforderung des Heizungskreises (18) über zumindest eine Leitung des zweiten Anschlusspaares (34) der erwärmte Wärmeträger dem Wärmespeicher zugeführt ist.

8. Heizungsanlage nach Anspruch 1, **dadurch gekennzeichnet, dass** als Wärmeträger Brauchwasser und als Wärmespeicher (10) ein Brauchwasserspeicher verwendet sind.

9. Heizungsanlage nach Anspruch 8, **dadurch gekennzeichnet, dass** dem Brauchwasserspeicher in dessen oberem Teil Brauchwasser entnehmbar ist.

10. Heizungsanlage nach Anspruch 8 oder 9, **dadurch gekennzeichnet, dass** bei einer Wärmeanforderung für Brauchwasser über zumindest eine Leitung des ersten Anschlusspaares (32) erwärmtes Brauchwasser dem Wärmespeicher (10) zugeführt ist.

## Claims

1. Heating system with a heat store (10) which is filled with a heat transfer medium, and with a heat generator (26) which heats the heat transfer medium, means (20, 36) being provided which extract heat from the heat transfer medium in order to heat a heating circuit (18), **characterized in that**, via a first heat transfer medium circuit with a first pair of connections (32) and via a second heat transfer medium circuit with a second pair of connections (34), the heat transfer medium can be extracted from the heat store (10) and the heat transfer medium heated by the heat generator (26) can be supplied to the said heat store, and **in that** the first pair of connections (32) issues into the upper region of the heat store (10) and the second pair of connections (34) issues into the lower region of the heat store (10).

2. Heating system according to Claim 1, **characterized in that** the means provided are a heat exchanger (20) arranged in the heat store (10).

3. Heating system according to Claim 1, **characterized in that** the first pair of connections (32) is arranged above and the second pair of connections (34) below the heat exchanger (20).

4. Heating system according to Claim 1, **characterized in that** the means provided are a heating-circuit store (36) which lies in the heating circuit (18) and which surrounds the heat store (10).

5. Heating system according to Claim 1, **characterized in that** the heat transfer medium is heated via a solar installation (14).

6. Heating system according to Claim 1, **characterized in that** the heat generator (26) which is used is a continuous-flow heater.

7. Heating system according to Claim 1, **characterized in that**, in the event of a heat demand of the heating circuit (18), the heated heat transfer medium is supplied to the heat store via at least one line of the second pair of connections (34).

8. Heating system according to Claim 1, **characterized in that** the heat transfer medium which is used is service water and the heat store (10) which is used is a service-water store.

9. Heating system according to Claim 8, **characterized in that** the service water can be extracted from the service-water store in the upper part of the latter.

10. Heating system according to Claim 8 or 9, **characterized in that**, in the event of a heat demand for service water, heated service water is supplied to the heat store (10) via at least one line of the first pair of connections (32).

## Revendications

1. Installation de chauffage comprenant un accumulateur de chaleur (10) rempli d'un fluide caloporteur, un générateur de chaleur (26) échauffant le fluide caloporteur, et des moyens (20, 36) pour extraire du fluide caloporteur de la chaleur destinée à échauffer un circuit de chauffage (18),
**caractérisée en ce que**
par l'intermédiaire d'un premier circuit de fluide caloporteur équipé d'une première paire de raccords (32) et d'un second circuit de fluide caloporteur équipé d'une seconde paire de raccords (34), du fluide caloporteur extrait de l'accumulateur (10) peut être échauffé par le générateur de chaleur (26), et être renvoyé à l'accumulateur, la première paire de raccords (32) débouchant à la partie supérieure de l'accumulateur (10) tandis que la seconde paire de raccords (34) débouche à la partie inférieure de l'accumulateur (10).

2. Installation de chauffage selon la revendication 1,
**caractérisée en ce qu'**
il est prévu, comme moyen, un échangeur de chaleur (20) monté à l'intérieur de l'accumulateur de chaleur (10).

3. Installation de chauffage selon la revendication 1,
**caractérisée en ce que**
la première paire de raccords (32) est montée au-dessus de l'échangeur de chaleur (20), et la seconde paire de raccords (34) en dessous.

4. Installation de chauffage selon la revendication 1,
**caractérisée en ce qu'**
il est prévu, comme moyen, un accumulateur de circuit de chauffage (36) monté dans le circuit de chauffage (18) et entourant l'accumulateur de chaleur (10).

5. Installation de chauffage selon la revendication 1,
**caractérisée en ce que**
le fluide caloporteur est chauffé par une installation solaire (14).

6. Installation de chauffage selon la revendication 1,
**caractérisée en ce que**
comme générateur de chaleur (26) il est prévu un chauffe-eau instantané.

7. Installation de chauffage selon la revendication 1,
**caractérisée en ce que**
quand le circuit de chauffage (18) demande de la chaleur, le fluide caloporteur échauffé est amené à l'accumulateur de chaleur par au moins une conduite de la seconde paire de raccords (34).

8. Installation de chauffage selon la revendication 1,
**caractérisée en ce que**
de l'eau industrielle est utilisée comme fluide caloporteur et un accumulateur d'eau industrielle est utilisé comme accumulateur de chaleur (10).

9. Installation de chauffage selon la revendication 8,
**caractérisée en ce qu'**
on peut soutirer de l'eau industrielle à la partie supérieure de l'accumulateur d'eau industrielle.

10. Installation de chauffage selon l'une quelconque des revendications 8 ou 9,
**caractérisée en ce que**
quand l'eau industrielle demande de la chaleur, de l'eau industrielle échauffée est envoyée à l'accumulateur de chaleur (10) par une conduite de la première paire de raccords (32).
